# EUROPEAN PATENT APPLICATION

(11) **EP 2 368 862 A1**
(43) Date of publication of application: **28.09.2011**
(21) Application number: 11250067.3
(22) Date of filing: 21.01.2011
(51) Int. Cl.: C03C 27/10, C09J 11/00, H01G 9/20, H01L 51/52

(54) **Sealant, dye-sensitized solar cell including the same, and method of manufacturing the dye-sensitized solar cell**

(30) Priority: 23.03.2010 KR 20100025871
(71) Applicant: Samsung SDI Co., Ltd., Yongin-si, Gyeonggi-do (KR)
(72) Inventor: Yang, Nam-Choul, Yongin-si Gyeonggi-do (KR); Kim, Hyun-Chul, Yongin-si Gyeonggi-do (KR)
(74) Representative: Mounteney, Simon James

(57) **Abstract**

A sealant disposed between substrates for sealing, a dye-sensitized solar cell including the same, and a method of manufacturing the dye-sensitized solar cell. The sealant includes a hot melt adhesive for absorbing heat and adhering to the substrates and heat generation particles for absorbing energy and generating heat.

## Description

### BACKGROUND

### 1. Field

The invention relates to a sealant, a dye-sensitized solar cell including the same, and a method of manufacturing the dye-sensitized solar cell.

### 2. Description

Solar energy has been highlighted as a renewable energy source to replace energy obtained from oil, coal, and natural gas. Solar cells are classified according to their manufacturing materials and may include, e.g., silicon solar cells and compound semiconductor solar cells. Single crystal silicon solar cells, polycrystalline silicon solar cells, amorphous silicon solar cells, and the like have been commercialized. In particular, single crystal silicon solar cells have an energy efficiency of about 18%, polycrystalline silicon solar cells have an energy efficiency of about 15%, and amorphous silicon solar cells have an energy efficiency of about 10%. Silicon solar cells are formed of a semiconductor material and generate electricity by opto-electric conversion.

Dye-sensitized solar cells generate electricity as in photosynthesis according to a photo-electrochemical conversion mechanism. Dye-sensitized solar cells have an energy conversion efficiency of about 11 % or greater. Dye-sensitized solar cells have a theoretical conversion efficiency higher than that of silicon solar cells, which increases the actual energy conversion efficiency and reduces the manufacturing costs thereof to 1/5. Thus, dye-sensitized solar cells can be used in a wide range of applications.

When dye-sensitized solar cells absorb sunlight, electrons are transported in dye molecules and are injected into a conduction band of a semiconductor oxide. Then, the injected electrons pass through interfaces between particles of an oxide electrode and reach a conductive film. Thereafter, holes generated in the dye molecules are reduced by an electrolyte sealed between two substrates by a sealant, thereby generating a current.

### SUMMARY

to the invention sets out to provide a sealant, a dye-sensitized solar cell including the same, and a method of manufacturing the dye-sensitized solar cell, which represent advances over the related art.

It is an object of the invention to provide a sealant for reducing damage to dyes and improving an active area, a dye-sensitized solar cell including the sealant, and a method of manufacturing the dye-sensitized solar cell.

It is another object of the invention to provide a sealant for improving sealing characteristics of a dye-sensitized solar cell.

At least one of the above and other features and advantages may be realized by providing a sealant disposed between substrates for sealing, the sealant including hot melt adhesives for absorbing heat and adhering to the substrates; and heat generation particles absorbing energy and generating heat.

The heat generation particles may include first materials that convert at least part of light incident thereon into heat.

The first materials may include at least one of carbon black, nano-carbon, metal oxides, and metal sulfides.

The heat generation particles may include second materials that generate heat upon application of a magnetic field thereto.

The second materials may be super paramagnetic materials.

The second materials may include at least one of silica (SiO₂) and alumina (Al₂O₃).

The second materials may further include iron oxide.

The hot melt adhesives may include at least one of an ethylene vinyl acetate-based derivative, an ethylene-acrylic acid derivative, a polyolefin derivative, a polyacryl polymer, a styrene-acryl polymer, and polyvinyl butyral.

The hot melt adhesives may include at least one of a carboxylic acid, a carboxylated metal ion, maleic anhydride, and a maleic acid.

At least one of the above and other features and advantages may also be realized by providing a dye-sensitized solar cell including a first substrate and a second substrate facing each other; a first electrode and a second electrode respectively disposed on the first substrate and the second substrate and facing each other; an electrolyte between the first substrate and the second substrate; and a sealant between the first substrate and the second substrate for sealing the electrolyte, wherein the first electrode includes a semiconductor oxide layer into which dye molecules are absorbed, and the sealant includes hot melt adhesives for absorbing heat and adhering to the first and second substrates; and heat generation particles absorbing energy and generating heat.

The heat generation particles may include first materials that convert at least part of light incident thereon into heat.

The first materials may include at least one of carbon black, nano-carbon, metal oxides, and metal sulfides.

The first materials may include at least one of copper (Cu), aluminum (Al), bismuth (Bi), tin (Sn), indium (In), zinc (Zn), titanium (Ti), chromium (Cr), molybdenum (Mo), tungsten (W), cobalt (Co), iridium (Ir), nickel (Ni), palladium (Pd), platinum (Pt), silver (Ag), gold (Au), zirconium (Zr), iron (Fe), lead (Pb), tellurium (Te) containing metal oxide and sulfide, phthalocyanines, nickel dithiolenes, graphite, pyrazolone, dianisidine, metal boride, carbide, nitride, and carbonitride.

The first materials may be capable of absorbing infrared rays.

The heat generation particles may include second materials that generate heat upon application of a magnetic field thereto.

The second materials may be super paramagnetic materials.

The second materials may include at least one of silica (SiO₂) or alumina (Al₂O₃).

The second materials may further include iron oxide.

The hot melt adhesives may include at least one of an ethylene vinyl acetate-based derivative, an ethylene-acrylic acid derivative, a polyolefin derivative, a polyacryl polymer, a styrene-acryl polymer, and polyvinyl butyral.

The hot melt adhesives may include at least one of a carboxylic acid, a carboxylated metal ion, maleic anhydride, and a maleic acid.

The hot melt adhesives may include at least one of manganese (Mn), iron (Fe), vanadium (V), chromium (Cr), nickel (Ni), cobalt (Co), and copper (Cu).

At least one of the above and other features and advantages may also be realized by providing a method of manufacturing a dye-sensitized solar cell, the method including forming a first electrode on a first substrate; forming a second electrode on a second substrate such that the second electrode faces the first electrode on the first substrate; providing a sealant between the first substrate and the second substrate; combining the first substrate with the second substrate; and providing electrolyte between the first substrate and the second substrate, wherein the sealant includes hot melt adhesives for absorbing heat and adhering to the first and second substrates; and heat generation particles absorbing energy and generating heat.

The heat generation particles may include first materials that convert at least part of light incident thereon into heat, and the combining the first substrate with the second substrate may further include irradiating light to the sealant.

The heat generation particles may include second materials that generate heat upon application of a magnetic field thereto, and the combining the first substrate with the second substrate may further include applying a magnetic field to the sealant.

At least some of the above and other features of the invention are set out in the appended claims.

### BRIEF DESCRIPTION OF THE DRAWINGS

The above and other features and advantages will become more apparent to those of ordinary skill in the art by describing in detail embodiments of the invention with reference to the attached drawings, in which:

FIG. 1 illustrates a conceptual diagram for explaining an operation principle of a dye-sensitized solar cell, according to an embodiment of the invention;

FIG. 2 illustrates a cross-sectional view of a sealant and a dye-sensitized solar cell including the sealant, according to an embodiment of the invention;

FIG. 3 illustrates a flowchart illustrating a method of manufacturing a dye-sensitized solar cell, according to an embodiment of the invention;

FIG. 4 illustrates a cross-sectional view of a stage in a method of melting a sealant in a dye-sensitized solar cell including the sealant, according to an embodiment of the invention; and

FIG. 5 illustrates a cross-sectional view of a stage in a method of melting a sealant in a dye-sensitized solar cell including the sealant, according to another embodiment of the invention.

### DETAILED DESCRIPTION

Embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

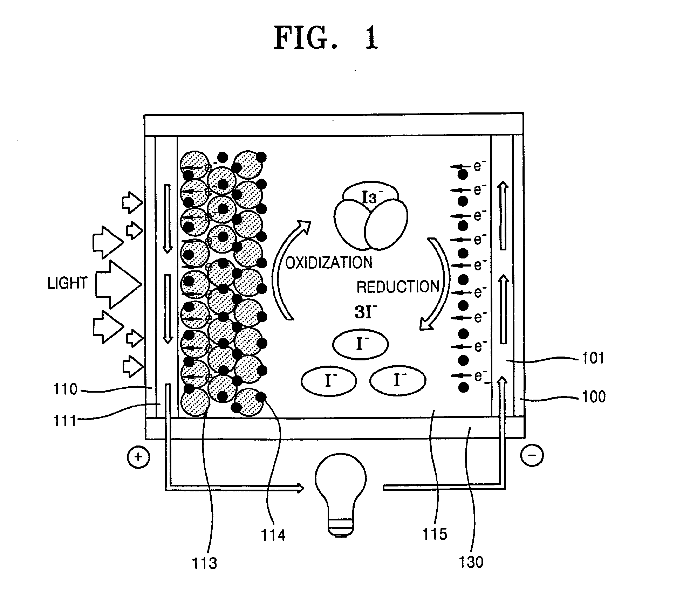

FIG. 1 illustrates a conceptual diagram for explaining an operation principle of a dye-sensitized solar cell, according to an embodiment of the invention. Referring to FIG. 1, when sunlight is incident on the dye-sensitized solar cell, dye molecules 114 adsorbed on a surface of a semiconductor oxide layer 113, i.e., a nano-sized semiconductor oxide layer, may transit from a highest occupied molecular orbital (HOMO) energy level to a lowest unoccupied molecular orbital (LUMO) energy level and thus electrons e- may be generated. That is, an electron and hole of an electron/hole pair of the dye molecules 114 may be separated from each other so that electrons and holes are generated, the electrons e- may be discharged, and the dye molecules 114 may be oxidized. The generated electrons e- may be injected into a conductive band of the semiconductor oxide layer 113 and pass through interfaces between particles of the semiconductor oxide layer 113 to reach a conductive film 111 according to a chemical diffusion gradient. Meanwhile, holes generated at the HOMO energy level of the dye molecules 114 may be reduced by electrons received from iodine ions I⁻ in an electrolyte 115. The iodine ions I⁻ provide holes and are oxidized. The iodine ions I⁻oxidized in the electrolyte 115 may be reduced by electrons received from an opposite electrode 101 through an external electrical circuit. Thus, when the dye-sensitized solar cell absorbs sunlight, electrons circulate therein so that a current flows in the dye-sensitized solar cell.

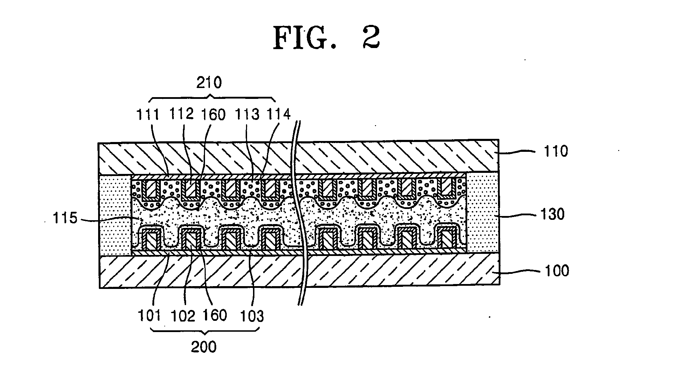

FIG. 2 illustrates a cross-sectional view of a sealant 130 and a dye-sensitized solar cell including the sealant 130, according to an embodiment of the invention.

The sealant 130 will now be described in conjunction with the entire structure of the dye-sensitized solar cell. Referring to FIG. 2, the dye-sensitized solar cell may include a first substrate 110, a second substrate 100, a first electrode 210, a second electrode 200, the electrolyte 115, and the sealant 130.

The first electrode 210 may be formed on the first substrate 110 and may be a photocathode electrode that serves as a cathode. The second electrode 200 may be formed on the second substrate 100 and may be an opposite electrode that serves as an anode. The first substrate 110 and the second substrate 100 may be transparent. The electrolyte 115 may be filled or provided between the photocathode electrode 210 and the opposite electrode 200. The first substrate 110 and the second substrate 100 may be sealed using the sealant 130 to, e.g., prevent the electrolyte 115 from leaking.

The photocathode electrode 210 may include a first transparent conductive layer 111 on the first substrate 110, first grid electrodes 112 on the first transparent conductive layer 111, a protection film 160 covering the first grid electrodes 112, the nano-sized semiconductor oxide layer 113, and the dye molecules 114 adsorbed onto the nano-sized semiconductor oxide layer 113.

The first substrate 110 may be formed of a transparent glass material or a flexible plastic material, e.g., polyethylene terephthalate (PET), polycarbonate (PC), polyimide (PI), polyethylene naphthalate (PEN), or polyethersulfone (PES).

The first transparent conductive layer 111 may be a conductive thin film, e.g., indium tin oxide (ITO) or F doped tin dioxide (SnO₂) (FTO). The first transparent conductive layer 111 may have, e.g., a single layer structure or a multiple layer structure. The conductive thin film may increase electron forming efficiency. The first transparent conductive layer 111 may have a high permeability, which may facilitate penetration of sunlight to the dye molecules 114. However, the first transparent conductive layer 111 may have a relatively high electrical conductivity, which may reduce the efficiency of forming electrons. Thus, the first grid electrodes 112 may be formed in order to compensate for the high electrical conductivity of the first transparent conductive layer 111.

The first grid electrodes 112 may be formed of metal, e.g., silver (Ag) and/or aluminum (Al), and may be formed in a variety of patterns, e.g. a stripe pattern or a grid pattern. The first grid electrodes 112 may have an electrical resistance lower than that of the first transparent conductive layer 111 so that current may smoothly flow therethrough. The first grid electrodes 112 may be covered by the protection film 160 to protect the first grid electrodes 112 from the electrolyte 115.

The nano-sized semiconductor oxide layer 113 may be formed on the first transparent conductive layer 111 and the protection film 160. The nano-sized semiconductor oxide layer 113 may be, e.g., a titanium dioxide (TiO₂) layer, a tin dioxide (SnO₂) layer, or a zinc oxide (ZnO) layer. The nano-sized semiconductor oxide layer 113 may have a structure in which a plurality of nanometer sized wide band gap semiconductor particles are stacked at appropriate intervals from each other. The dye molecules 114 containing, e.g., a Ru complex compound, may be chemically adsorbed onto surfaces of the nanometer sized wide band gap semiconductor particles. When a surface area of the nanometer sized wide band gap semiconductor particles onto which the dye molecules 114 are adsorbed increases, more current may be generated.

The dye molecules 114 may contain, e.g., the Ru complex compound. In an implementation, e.g., thiophene, phthalocyanine, porphyrin, indoline, or an organic substance containing quinoline, and derivatives thereof, may be used as the dye molecules 114.

The opposite electrode 200 may include a second transparent conductive layer 101 on the second substrate 100, second grid electrodes 102 on the second transparent conductive layer 101, the protection film 160 covering the second grid electrodes 102, and a catalyst film 103.

The second substrate 100 may be formed of, e.g., a transparent glass material or a flexible plastic material.

The second transparent conductive layer 101 may be a conductive thin film, e.g., ITO or FTO. The second grid electrodes 102 may be formed in order to compensate for the high electrical conductivity of the second transparent conductive layer 101. The protection film 160 may be formed on the second grid electrodes 102 to protect the second grid electrodes 102 from the electrolyte 115.

The catalyst film 103 may be formed on the second transparent conductive layer 101 and the protection film 160. The catalyst film 103 may be, e.g., a platinum (Pt) thin film or a carbon (C) thin film. The catalyst film 103 may act as a reduction catalyst that receives electrons that have moved through an external circuit. In an implementation, the platinum thin film may be formed and thus the catalyst film 103 may reflect sunlight incident through the photocathode electrode 210, thereby increasing the conversion efficiency of solar energy.

The electrolyte 115 may be disposed between the photocathode electrode 210 and the opposite electrode 200. The electrolyte 115 may be, e.g., an iodine oxidation-reduction liquid electrolyte solution (I₃⁻/I⁻). The electrolyte 115 may reduce the oxidized dye molecules 114.

The embodiments are not limited to the first electrode 210 and the second electrode 200 and it may be understood that various modifications may be made by one of ordinary skill in the art. For example, the first electrode 210 and the second electrode 200 need not include grid electrodes, or the first electrode 210 and the second electrode 200 need not include the first and second transparent conductive layers 101 and 111. Also, the first electrode 210 and the second electrode 200 may also not include the protection film 160.

The sealant 130 may be sealed to, e.g., prevent the electrolyte 115 between the first substrate 110 and the second substrate 100 from leaking. The sealant 130 may be formed along edges of the first substrate 110 and the second substrate 100.

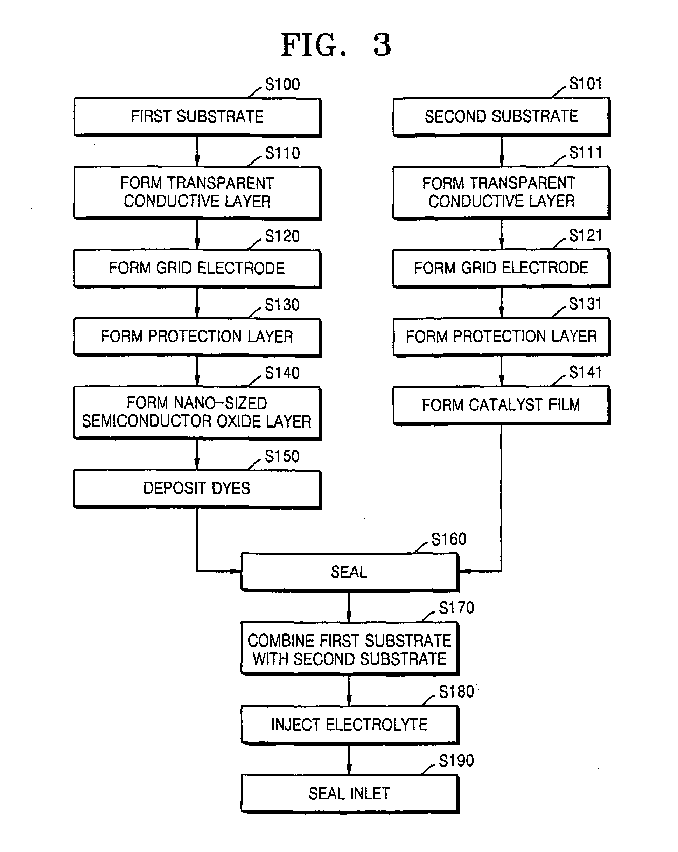

A method of manufacturing the sealant 130 and the dye-sensitized solar cell including the sealant 130 will now be described. FIG. 3 illustrates a flowchart of a method of manufacturing the dye-sensitized solar cell, according to an embodiment of the invention.

Referring to FIG. 3, the method of manufacturing the dye-sensitized solar cell may include forming the photocathode electrode 210 on the first substrate 110 (Operations S100, S110, S120, S 130, S 140, and S 150), forming the opposite electrode 200 on the second substrate 100 (Operations S101, S111, S121, S 131, and S141), sealing and combining the first substrate 110 with the second substrate 100 (Operations S160 and S 170), injecting the electrolyte 115 between the first substrate 110 and the second substrate 100 (Operation S 180), and sealing an inlet (Operation S190). Although it is illustrated in FIG. 3 that the electrolyte 115 is injected between the first substrate 110 and the second substrate 100 after the first substrate 110 and the second substrate 100 are sealed, the embodiments are not limited thereto; and the first substrate 110 and the second substrate 100 may be sealed after the electrolyte 115 is injected between the first substrate 110 and the second substrate 100.

A process of forming the first electrode 210, i.e., the photocathode electrode, on the first substrate 110 will now be described. In S 110, the first transparent conductive layer 111, e.g., ITO or FTO, may be formed on the first substrate 110 that is formed of, e.g., a transparent glass. In operation S120, the first grid electrodes 112 formed of, e.g., silver (Ag) or aluminum (Al), may be formed in parallel on the first transparent conductive layer 111. The first grid electrodes 112 may have various patterns as an alternative to a stripe pattern. In operation S 130, the protection film 160 may be formed on the first grid electrodes 112 in order to protect the first grid electrodes 112. In operation S 140, the nanometer-sized semiconductor oxide layer 113 may be formed on the first transparent conductive layer 111 and the protection film 160. The nanometer-sized semiconductor oxide layer 113 may be, e.g., a titanium dioxide (TiO₂) layer, a tin dioxide (SnO₂) layer, or a zinc oxide (ZnO) layer. In operation S 150, the dye molecules 114 may be adsorbed onto the nanometer-sized semiconductor oxide layer 113. The dye molecules 114 may be adsorbed onto the nano meter-sized semiconductor oxide layer 113 by, e.g., soaking dyes into the nano meter-sized semiconductor oxide layer 113 of the first substrate 110.

A process of forming the second electrode 200, i.e., the opposite electrode, on the second substrate 100 will now be described. In operation S111, the second transparent conductive layer 101, e.g., ITO or FTO, may be formed on the second substrate 100 formed of, e.g., a transparent glass. In operation S121, the second grid electrodes 102 formed of, e.g., silver (Ag) or aluminum (Al), may be formed in parallel on the second transparent conductive layer 101. The second grid electrodes 102 may have various patterns as an alternative to a stripe pattern. In operation S131, the protection film 160 may be formed on the second grid electrodes 102 in order to protect the second grid electrodes 102. In operation S 141, the catalyst film 103 may be formed on the second grid electrodes 102 and the protection film 160. The catalyst film 103 may be, e.g., a platinum (Pt) thin film or a copper (C) thin film.

In operation S160, the sealant 130 may be provided along the edge of the first substrate 110 and the second substrate 100 to, e.g., prevent the electrolyte 115 from leaking. Here, in order to melt the sealant 130 at a high temperature, the sealant 130 may be partially or entirely heated. However, depending on the heating process, the heat for melting the sealant 130 may be transferred to the dye molecules 114 disposed around the sealant 130 through the first and second substrates 100 and 110 formed of glass. Thus, the dye molecules 114 may be damaged by the heat. One method of preventing the dye molecules 114 from being damaged may include spacing the dye molecules 114 and the sealant 130 apart from each other; and an active area of the dye-sensitized solar cell may be thereby reduced. If the sealant 130 is heated at high temperature, the first substrate 110 or the second substrate 100 may be broken. Accordingly, in an embodiment, energy may be provided to sealants 130 and/or 130' including heat generation particles 132 and/or 133 during sealing in operation S160 and combining of the first substrate 110 with the second substrate 100 in operation S 170. Thus, the sealants 130 and/or 130' may be melted such that heat is generated only in the sealants 130 and 130' and damage to the dye molecules 114 due to heat diffusion may be advantageously minimized.

Hereinafter, the sealant will be described. The dye-sensitized solar cell may include the photocathode electrode 210, the opposite electrode 200, and the electrolyte 115 between the first substrate 110 and the second substrate 100. Accordingly, the first substrate 110 and the second substrate 100 may be spaced apart from each other by a predetermined interval. The sealant 130 may maintain the interval between the first substrate 110 and the second substrate 100 in the dye-sensitized solar cell.

In the sealants 130 and/or 130' according to an embodiment, the sealants 130 and/or 130' may include hot melt adhesives 131 and the heat generation particles 132 and/or 133. As the sealants 130 and/or 130' include the heat generation particles 132 and/or 133, damage to the dye molecules 114 may be prevented and only the sealants 130 and/or 130' may be melted. For example, the heat generation particles 132 and/or 133 may generate heat by using a small external optical source or a magnetic field so that an amount of heat flowing into the sealants 130 and/or 130' may be reduced and thus only the sealants 130 and/or 130' may be melted. Since the amount of heat flowing into the sealants 130 and/or 130' may be reduced, breakdown of the dye molecules 114 around the sealants 130 and/or 130' may be reduced during heating of the sealants 130 and/or 130'.

Hereinafter, the hot melt adhesives 131 included in the sealants 130 and 130' will be described and then the heat generation particles 132 and 133 will be described.

The hot melt adhesives 131 will now be described. The sealant 130 may include the hot melt adhesives 131. The hot melt adhesives 131 may be melted by heating and thus adhesion may occur therein. The hot melt adhesives 131 may be heated by, e.g., irradiating with a laser beam. However, the embodiments are not limited thereto; and the hot melt adhesives 131 may be heated in various other ways.

Adhesion of the hot melt adhesives 131 may disappear at room temperature. However, if the hot melt adhesives 131 are melted, the hot melt adhesives 131 may include an adhesion member, e.g., an ethylene vinyl acetate-based derivative or an ethylene-acrylic acid derivative. Also, the hot melt adhesives 131 may include, e.g., a polyolefin derivative as an adhesion member. In addition, the hot melt adhesives 131 may include, e.g., a polyacryl polymer, stylene-acryl polymer, or polyvinyl butyral, as an adhesion member. Each adhesion member may further include, e.g., a carboxylic acid, a carboxylated metal ion, maleic anhydride, and/or a maleic acid. The adhesion member is not limited to the above examples and may vary. Also, a functional group included in the adhesion member is not limited to the above examples and various types of functional group may be further included in the adhesion member.

The hot melt adhesives 131 may be heated by, e.g., irradiating with a laser beam. The wavelength of a laser beam used for laser sealing may be, e.g., the wavelength of an infrared ray region. A laser beam absorbing material may be, e.g., manganese (Mn), iron (Fe), vanadium (V), chromium (Cr), nickel (Ni), cobalt (Co), or copper (Cu), and may be included in the hot melt adhesives 131. However, the embodiments are not limited thereto; and a material having high light absorbance with respect to the laser wavelength may be a laser beam absorbing material.

Hereinafter, the heat generation particles 132 and 133 will be described. The heat generation particles 132 and 133 may be, e.g., light-to-heat conversion (LTHC) materials 132 or nano-particles 133 that generate heat by applying a magnetic field.

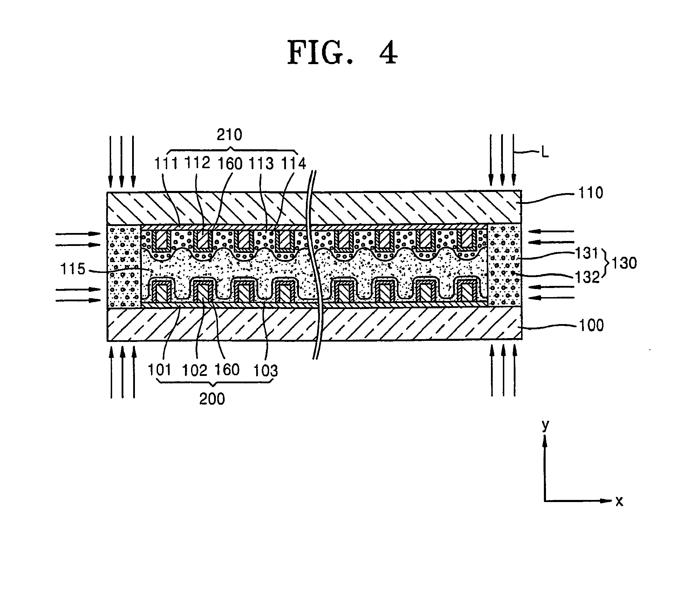

Firstly, the sealant 130 including the LTHC or first materials 132 will be described with reference to FIG. 4. The LTHC materials 132 may convert at least part of light incident through, e.g., laser beam irradiation, into heat. The LTHC materials 132 include absorb, e.g., visible rays and/or light in an infrared ray region, and may convert the absorbed light into heat. The LTHC materials 132 may include a material, e.g., dyes, pigments, metals, metal oxides, and/or metal films, that converts appropriate light into heat.

In an implementation, the LTHC materials 132 may include carbon-based materials, e.g., carbon black or nano-carbon, metal oxides, or metal sulfides. In another implementation, the LTHC materials 132 may include, e.g., a pigment such as carbon black or a binder such as organic polymer. In yet another implementation, the LTHC materials 132 may include, e.g., metals, metals formed of aluminum, in which an external appearance thereof appears as black, and partially oxidized, or metal oxides. The dyes used for the LTHC materials 132 may be dissolved in a binder or may exist as fine particles at least partially dispersed in the binder. A particle size of the LTHC materials 132, in which fine particles are dispersed, may be, e.g., about 10 µm or below. In another implementation, the particle size of the LTHC materials 132 may be about 1 µm or below. The dyes used for the LTHC materials 132 may include dyes that absorb at a spectrum of an infrared ray region. The LTHC materials 132 may include pigments. In an implementation, the pigment may include, e.g., phthalocyanines, nickel dithiolenes, carbon black, and/or graphite. In another implementation, e.g., pyrazolone yellow pigments or dianisidine red pigments may be used. The pigment may be an inorganic pigment and may include, e.g., aluminum (Al), bismuth (Bi), tin (Sn), indium (In), zinc (Zn), titanium (Ti), chromium (Cr), molybdenum (Mo), tungsten (W), cobalt (Co), iridium (Ir), nickel (Ni), palladium (Pd), platinum (Pt), copper (Cu), silver (Ag), gold (Au), zirconium (Zr), iron (Fe), lead (Pb), metal oxide such as tellurium (Te), or sulfide. Also, e.g., metal boride, carbide, nitride, or carbonitride may be used. The metal may include, e.g., Al, Bi, Sn, In, Te, or Zn.

In FIG. 4, when light L, e.g., a laser beam, is irradiated to the sealant 130, a part of incident light L may be converted into heat by the LTHC materials 132. Accordingly, heat generated by the LTHC materials 132 in the sealant 130 may be transferred to the hot melt adhesives 131. Since the heat may be generated by the LTHC materials 132, an amount of heat to be incident outside of the sealant 130 may be reduced. A reduction in the amount of heat to be incident to the outside may facilitate sealing of the sealant 130 by a relatively small amount of external light. Accordingly, as external light incident on the dye-sensitized solar cell is reduced, undesirable breakdown of the dye molecules 114 that occurs due to heating may be reduced.

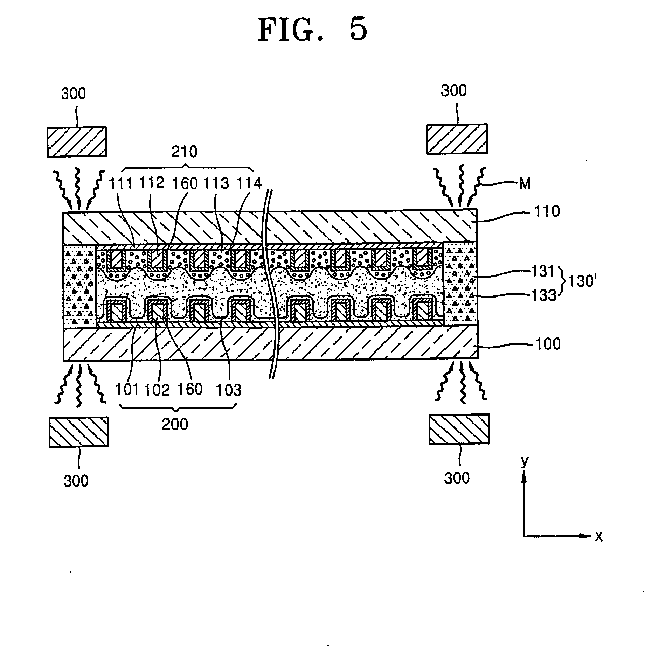

The sealant 130' including the nano-particles 133, i.e., second materials, that generate heat by applying a magnetic field M is described with reference to FIG. 5. Heat may be generated by the magnetic field M according to a change in the magnetic field M or a change in a property of the magnetic field M, e.g., the intensity of the magnetic field M. However, heat generation by the magnetic field M is not limited thereto; and the nano-particles 133 may generate heat by using the magnetic field M in various other ways.

The nano-particles 133, which generate heat by applying the magnetic field M, may be super paramagnetic materials. Super paramagnetism is a form of magnetism, which appears in small ferromagnetic or ferrimagnetic nanoparticles. In small enough nanoparticles, magnetization can randomly flip direction under the influence of temperature. The typical time between two flips is called the Néel relaxation time. In the absence of external magnetic field, when the time used to measure the magnetization of the nanoparticles is much longer than the Néel relaxation time, their magnetization appears to be in average zero: they are said to be in the super paramagnetic state. In this state, an external magnetic field is able to magnetize the nanoparticles, similarly to a paramagnet. However, their magnetic susceptibility is much larger than the one of paramagnets.

The nano-particles 133, which may generate heat by applying the magnetic field M, may include, e.g., silica (SiO₂) or alumina (Al₂O₃), to which a material, e.g., iron oxide formed of hematite (Fe₂O₃) or magnetite (Fe₃O₄), is mixed.

In an implementation, a size of the super paramagnetic nano-particles 133 may be, e.g., about 5 to about 100 nm. If a magnetic field M that is not greater than 0.25 mT is applied, magnetization of the super paramagnetic nano-particles 133 may be about 10 to about 70 Am²/kg. The size and magnetization of the nano-particles 133 are not limited to the above examples and may vary.

In FIG.5, when the magnetic field M is generated by an alternating magnetic derivative 300, heat may be generated in the nano-particles 133 in the sealant 130'; and the hot melt adhesives 131 of the sealant 130' may be melted. Here, the hot melt adhesives 131 may be disposed between the first substrate 110 and the second substrate 100 and then pressure may be applied to the first substrate 110 and the second substrate 100, e.g., in a first direction y, thereby melting the sealant 130' using the alternating magnetic derivative 300. Accordingly, due to the nano-particles 133 that generate heat by the magnetic field M, the sealant 130' may generate heat by itself so that an external optical source may not be needed and/or an amount of heat from an external optical source may be reduced. As the nano-particles 133 are included in the sealant 130, heat damage to the dye molecules 114 occurring due to heat transfer while heating the sealant 130' may be beneficially minimized.

Referring to FIG. 3, in the sealing of the electrolyte 115 between the first substrate 110 and the second substrate 100 by disposing the sealants 130 and/or 130' between the first substrate 110 and the second substrate 100 and the combining of the first substrate 110 with the second substrate 100, in operations S160 and S 170, the sealants 130 and/or 130' may include the heat generation particles 132 and/or 133. Thus, the hot melt adhesives 131 may be efficiently melted using a smaller amount of light than when the heat generation particles 132 and/or 133 are not included. Also, the hot melt adhesives 131 may be melted by a small amount of heat or without external heating through the nano-particles 133 that generate heat by applying the magnetic field M. Here, the sealants 130 and/or 130' may be disposed on at least one of the first substrate 110 and the second substrate 100 and then energy may be applied to the heat generation particles 132 and/or 133 of the sealants 130 and/or 130'. Also, after the sealants 130 and/or 130' are disposed between the first substrate 110 and the second substrate 100, energy may be applied to the heat generation particles 132 and/or 133 while adhering the first substrate 110 to the second substrate 100. Energy may be applied to the heat generation particles 132 and/or 133 of the sealants 130 and/or 130' at various stages, if desired.

Since heat may be generated only in the sealants 130 and/or 130', heat damage to the dye molecules 114 that may otherwise occur due to heat transfer may be minimized. The heat damage to the dye molecules 114 may be reduced and thus a space for placing the dye molecules 114 may be expanded, thereby increasing an active area thereof. In other words, the dye molecules 114 may be provided closer to the edges of the solar cell, i.e., closer to the sealant 130 and/or 130', without concern for damage from heat. Also, an amount of external light during sealing may be reduced and thus investment and maintenance costs may be reduced. In addition, the amount of heat for partially heating the first substrate 110 and the second substrate 100 may be reduced or external light may not be needed so that stress generation and thermal deformation generated by partially heating the first substrate 110 and the second substrate 100 may be reduced.

The embodiments may be applied to an industry using and manufacturing the sealants and the dye-sensitized solar cells.

According to the sealant of an embodiment, heat may be generated within the sealant and thus diffusion of heat may be reduced. Thus, damage to dyes disposed around the sealant may be reduced.

Embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A sealant for disposal between two substrates for sealing them together, the sealant comprising:
hot melt adhesive for absorbing heat and adhering to the substrates; and
heat generation particles for absorbing energy and generating heat.

2. A sealant as claimed in claim 1, wherein the heat generation particles include a first material that converts light incident thereon into heat.

3. A sealant as claimed in claim 2, wherein the first material includes at least one of carbon black, nano-carbon, metal oxides, metal sulfides, copper (Cu), aluminum (Al), bismuth (Bi), tin (Sn), indium (In), zinc (Zn), titanium (Ti), chromium (Cr), molybdenum (Mo), tungsten (W), cobalt (Co), iridium (Ir), nickel (Ni), palladium (Pd), platinum (Pt), silver (Ag), gold (Au), zirconium (Zr), iron (Fe), lead (Pb), tellurium (Te) containing metal oxide and sulfide, phthalocyanines, nickel dithiolenes, graphite, pyrazolone, dianisidine, metal boride, carbide, nitride, and carbonitride.

4. A sealant according to claim 2 or 3, wherein the first material is capable of absorbing infrared rays.

5. A sealant as claimed according to any preceding claim, wherein the heat generation particles include a second material that generates heat upon application of a magnetic field thereto.

6. A sealant as claimed in claim 5, wherein the second material comprises a super paramagnetic material.

7. A sealant as claimed in claim 5, wherein the second material includes at least one of silica (SiO₂) and alumina (Al₂O₃).

8. A sealant as claimed in claim 7, wherein the second material further includes iron oxide.

9. A sealant as claimed in any preceding claim, wherein the hot melt adhesive includes at least one of an ethylene vinyl acetate-based derivative, an ethylene-acrylic acid derivative, a polyolefin derivative, a polyacryl polymer, a styrene-acryl polymer, and polyvinyl butyral.

10. A sealant as claimed in any preceding claim, wherein the hot melt adhesive includes at least one of a carboxylic acid, a carboxylated metal ion, maleic anhydride, and a maleic acid.

11. A sealant as claimed in any preceding claim, wherein the hot melt adhesive includes at least one of manganese (Mn), iron (Fe), vanadium (V), chromium (Cr), nickel (Ni), cobalt (Co), and copper (Cu).

12. A dye-sensitized solar cell, comprising:
a first substrate and a second substrate facing each other;
a first electrode and a second electrode respectively disposed on the first substrate and the second substrate and facing each other;
an electrolyte between the first substrate and the second substrate; and
a sealant situated between the first substrate and the second substrate for sealing the electrolyte between the first substrate and the second substrate,
wherein the first electrode includes a semiconductor oxide layer into which dye molecules are absorbed, and the sealant is as set out in one of claims 1 to 11.

13. A method of manufacturing a dye-sensitized solar cell, the method comprising:
forming a first electrode on a first substrate;
forming a second electrode on a second substrate such that the second electrode faces the first electrode on the first substrate;
providing a sealant between the first substrate and the second substrate;
combining the first substrate with the second substrate; and
providing electrolyte between the first substrate and the second substrate,
wherein the sealant includes:
a hot melt adhesive for absorbing heat and adhering to the first and second substrates; and
heat generation particles for absorbing energy and generating heat.

14. A method as claimed in claim 13, wherein:
the heat generation particles include a first material that converts light incident thereon into heat, and
the said combining of the first substrate with the second substrate includes irradiating the sealant with light.

15. A method as claimed in claim 13 or 14, wherein:
the heat generation particles include a second material that generates heat upon the application of a magnetic field thereto, and
the said combining of the first substrate with the second substrate includes applying a magnetic field to the sealant.
